# EUROPÄISCHE PATENTANMELDUNG

(11) **EP 0 967 403 A1**
(43) Veröffentlichungstag der Anmeldung: **29.12.1999**
(21) Anmeldenummer: 99101873.0
(22) Anmeldetag: 28.01.1999
(51) Int. Cl.: F16C 1/22

(54) **Bowdenzug mit Einstellvorrichtung**

(30) Priorität: 24.06.1998 DE 19828028
(71) Anmelder: R. SCHMIDT GMBH, 57368 Lennestadt (DE)
(72) Erfinder: Lohmann, Horst, 59846 Sundern (DE); Padberg, Christoph, 57368 Lennestadt Oedingen (DE)
(74) Vertreter: Köchling, Conrad, Dipl.-Ing.

(57) **Zusammenfassung**

Um einen Bowdenzug mit Einstellvorrichtung, bestehend aus einem Stahlseil (6) mit endseitigen Verdickungen (8), einer druckstabilen Seilhülle (7), die sich mit ihren Stirnenden an gestellfest gehalterten, vom Stahlseil (6) durchgriffenen Anschlagteilen abstützt, sowie der Einstellvorrichtung, die zwischen einem Stirnende der Seilhülle (7) und dem dortigen Anschlagteil angeordnet und vom Stahlseil (6) durchgriffen ist, zu schaffen, der einfach eingebaut werden kann, wird vorgeschlagen, daß die Einstellvorrichtung aus einem sich am Anschlagteil (B) abstützenden Formteil (1) und einem sich am Stirnende der Seilhülle (7) abstützenden Stützteil (4) besteht, welches sich federnd am Formteil (1) abstützt.

## Beschreibung

Die Erfindung betrifft einen Bowdenzug mit Einstellvorrichtung, bestehend aus einem Stahlseil mit endseitigen Verdickungen, einer druckstabilen Seilhülle, die sich mit ihren Stirnenden an gesteilfest gehalterten, vom Stahlseil durchgriffenen Anschlagteilen abstützt, sowie der Einstellvorrichtung, die zwischen einem Stirnende der Seilhülle und dem dortigen Anschlagteil angeordnet und vom Stahlseil durchgriffen ist.

Solche Bowdenzüge sind im Stand der Technik vielfach bekannt und werden vielfach bei Kraftfahrzeugen zur Betätigung von unterschiedlichsten Funktionsteilen eingesetzt.

Wegen des Funktionszusammenhanges zwischen der Bowdenzughülle (Seilhülle), dem Anschlagteil und dem die Seilhülle durchsetzenden Stahlseil ist eine genaue Justierung der Teile zueinander erforderlich, was mit montagetechnischem Aufwand verbunden ist.

Der Erfindung liegt die Aufgabe zugrunde, den montagetechnischen Aufwand beim Einbau von Bowdenzügen zu vermindern.

Zur Lösung dieser Aufgabe schlägt die Erfindung vor, daß die Einstellvorrichtung aus einem sich am Anschlagteil abstützenden Formteil und einem sich am Stirnende der Seilhülle abstützenden Stützteil besteht, welches sich federnd am Formteil abstützt.

Beim Einbau des Bowdenzuges werden die endseitigen Verdickungen mit den entsprechenden Funktionsteilen verbunden und die Anschlagteile werden an entsprechenden Befestigungspunkten insbesondere gesteilfest fixiert. Das sich am einen Ende der Seilhülle abstützende Stützteil ist federnd am Formteil abgestützt. Beim Einhängen der Anschlagteile an den entsprechenden Befestigungsstellen der Fahrzeugkarosserie oder der Funktiongsteile wird das Stützteil unter der Wirkung der Bowdenzughülle gegen Federkraft zum Formteil hin verschoben, so daß immer eine Vorspannkraft auf die Seilhülle wirksam bleibt. Hierdurch werden bestehende Toleranzen ausgeglichen, so daß der Bowdenzug sofort nach Einbau funktionstüchtig ist. Sofern eine entsprechend starke Feder eingebaut wird, ist die federnde Abstützung ausreichend.

Vorzugsweise ist zudem vorgesehen, daß zwischen Formteil und Stützteil als Federmittel eine vom Stahlseil axial durchgriffene Schraubendruckfeder angeordnet ist.

Bevorzugt kann auch vorgesehen sein, daß das Stützteil am Formteil unverschieblich befestigbar ist.

Hierbei wird die Federung des Federmittels zum Toleranzausgleich genutzt, wobei nach dem Einbau das Stützteil am Anschlagteil unverschieblich befestigt werden kann, so daß dann die Sollage nicht mehr federnd, sondern endgültig fixiert ist. Dies ermöglicht insbesondere den Einbau einer relativ weichen Feder, da die Federung nur als Toleranzausgleich genutzt wird, in der Normalfunktion des Bowdenzuges aber eine nicht federnde Verbindung zwischen Stützteil und Anschlagteil erreicht ist.

Insbesondere kann vorgesehen sein, daß das Stützteil eine vom Stahlseil durchgriffene Zahnstange ist, die am Formteil längs verschieblich geführt ist, und daß am Formteil ein verzahnter Riegel orthogonal zur Zahnstange verstellbar gehaltert ist, der in eine Freigabelage verstellbar ist, in der der verzahnte Riegel die Zahnstange freigibt, und in eine Sperrlage überführbar und in dieser verriegelbar ist, in welcher der verzahnte Riegel in Eingriff mit der Zahnstange ist und deren Verschiebebewegung blockiert.

Dabei kann zudem vorgesehen sein, daß der verzahnte Riegel am Formteil mittels eines spindelartigen Schraubentriebes verstellbar gehalten ist, wobei der Schraubentrieb mit Sperrmitteln des Formteiles korrespondiert, die ein selbständiges Lösen des Schraubentriebes ausschließen.

Ein Ausführungsbeispiel der Erfindung ist in der Zeichnung dargestellt und im folgenden näher beschrieben.

Es zeigt:

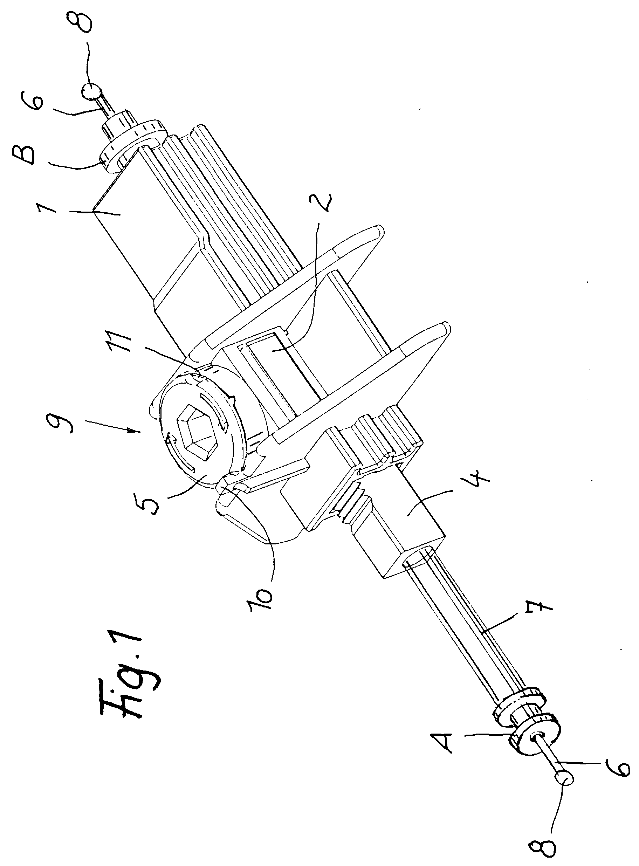

Figur 1 einen erfindungsgemäßen Bowdenzug in Ansicht;

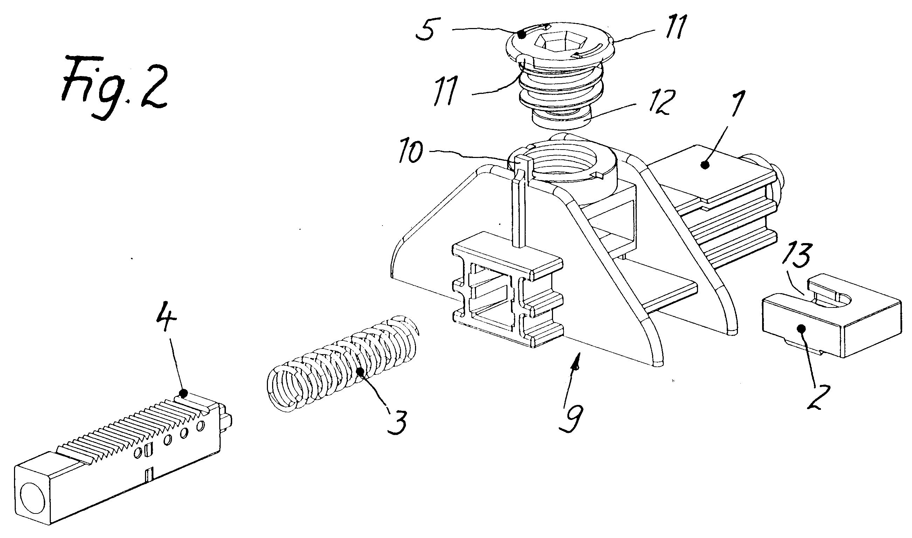

Figur 2 Einzelteile der Ausführungsform nach Figur 1 in explosionsartiger Darstellung.

In der Zeichnung ist ein Bowdenzug mit Einstellvorrichtung gezeigt. Die Gesamtvorrichtung besteht aus einem Stahlseil 6 mit endseitigen Verdickungen 8, einer druckstabilen Seilhülle 7, die sich mit ihren Stirnenden an gestellfest gehalterten, vom Stahlseil 6 durchgriffenen Anschlagteilen A,B abstützt, sowie der Einstellvorrichtung 9, die zwischen einem Stirnende der Seilhülle 7 und dem dortigen Anschlagteil A angeordnet und vom Stahlseil 6 durchgriffen ist.

Die Einstellvorrichtung 9 besteht im wesentlichen aus einem sich am Anschlagteil B abstützenden Formteil 1 in Form eines Kunststoffgehäuseteiles und einem sich am Stirnende der Seilhülle 7 abstützenden Stützteil 4, wobei sich das Stützteil 4 federnd am Formteil 1 abstützt. Zum Zwecke der federnden Abstützung ist zwischen dem Formteil 1 und dem Stützteil 4 als Federmittel eine vom Stahlseil 6 axial durchgriffene Schraubendruckfeder 3 angeordnet. Nach der Montage des Bowdenzuges, also nach dem Fixieren der variablen Befestigungspunkte (A/B) kann das Stützteil 4 am Formteil 1 unverschieblich befestigt werden.

Hierzu ist das Stützteil 4 eine vom Stahlseil 6 durchgriffene Zahnstange, die am Formteil 1 längs verschieblich geführt ist. Am Formteil 1 ist ein verzahnter Riegel 2 quer zur Zahnstange des Teiles 4 verstellbar gehaltert, der in eine Freigabelage verstellbar ist, in der der verzahnte Riegel die Zahnstange freigibt und in eine Sperrlage überführt werden kann, in der er verriegelbar ist, in welcher der verzahnte Riegel in Eingriff mit der Zahnstange ist und deren Verschiebebewegung blockiert.

Der verzahnte Riegel ist am Formteil 1 mittels eines spindelartigen Schraubentriebes 5 verstellbar gehalten, wobei der Schraubentrieb 5 mit Sperrmitteln 10 des Formteiles 1 korrespondiert, die ein selbständiges Lösen des Schraubentriebes 5 ausschließen. Im Ausführungsbeispiel ist der Schraubentrieb 5 als Schraube mit stirnseitigem Werkzeugeingriff ausgebildet, wobei am Kopf der Schraube Ausnehmungen 11 ausgebildet sind, die mit einer federnden Raste (Sperrmittel 10 des Formteiles 1) zusammenwirken. Die Schraube weist an ihrem unteren Ende einen scheibenartigen Vorsprung 12 auf, auf den der Riegel 2 mit einer entsprechenden Ausnehmung 13 aufschiebbar ist, so daß der in der Einbausollage an dem Teil 1 unverdrehbar gehalterte Riegel 2 bei Drehung der Schraube in Richtung auf die Zahnung des Stützteiles 4 bewegt wird oder aber von der Zahnung abgehoben wird, so daß das Stützteil 4 freigegeben ist. Die Sperrmittel zwischen dem Schraubentrieb 5 und dem Gehäuseteil 1 können auch in anderer Form realisiert sein.

Zum Einbau der Vorrichtung ist der Schraubentrieb zunächst in einer oberen Stellung, in der der Riegel 4 freigegeben ist. Nach dem Einhängen der Befestigungspunkte (A,B) wird das Stützteil 4 samt Zahnstange gegen die Federkraft der Schraubendruckfeder 3 in das Gehäuseteil 1 gedrückt, so daß eine entsprechende Vorspannkraft auf die Seilhülle wirkt. Durch das Eindrehen des Schraubtriebes 5 wird der Riegel 2 gegen die Zahnung des Stützteiles 4 gedrängt und das Stützteil am Gehäuseteil 1 verriegelt. Die Schraube wird in der Endstellung eingerastet und gesichert.

Im Ausführungsbeispiel kann die Seilhülle 7 bis in die entsprechende kanalartige Ausnehmung des Stützteiles 4 eingesteckt sein oder auch mit dem Stützteil 4 einstückig ausgebildet oder mit diesem verklebt oder in sonstiger Weise verbunden sein.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Bowdenzug mit Einstellvorrichtung, bestehend aus einem Stahlseil (6) mit endseitigen Verdickungen (8), einer druckstabilen Seilhülle (7), die sich mit ihren Stirnenden an gestellfest gehalterten, vom Stahlseil (6) durchgriffenen Anschlagteilen abstützt, sowie der Einstellvorrichtung, die zwischen einem Stirnende der Seilhülle (7) und dem dortigen Anschlagteil angeordnet und vom Stahlseil (6) durchgriffen ist**, dadurch gekennzeichnet**, daß die Einstellvorrichtung aus einem sich am Anschlagteil (B) abstützenden Formteil (1) und einem sich am Stirnende der Seilhülle (7) abstützenden Stützteil (4) besteht, welches sich federnd am Formteil (1) abstützt.

2. Bowdenzug nach Anspruch 1, **dadurch gekennzeichnet**, daß zwischen Formteil (1) und Stützteil (4) als Federmittel eine vom Stahlseil (6) axial durchgriffene Schraubendruckfeder (3) angeordnet ist.

3. Bowdenzug nach Anspruch 1 oder 2, **dadurch gekennzeichnet**, daß das Stützteil (4) am Formteil (1) unverschieblich befestigbar ist.

4. Bowdenzug nach einem der Ansprüche 1 bis 3, **dadurch gekennzeichnet**, daß das Stützteil (4) eine vom Stahlseil (6) durchgriffene Zahnstange ist, die am Formteil (1) längs verschieblich geführt ist, und daß am Formteil (1) ein verzahnter Riegel (2) orthogonal zur Zahnstange verstellbar gehaltert ist, der in eine Freigabelage verstellbar ist, in der der verzahnte Riegel die Zahnstange freigibt, und in eine Sperrlage überführbar und in dieser verriegelbar ist, in welcher der verzahnte Riegel in Eingriff mit der Zahnstange ist und deren Verschiebebewegung blockiert.

5. Bowdenzug nach einem der Ansprüche 1 bis 4, **dadurch gekennzeichnet**, daß der verzahnte Riegel am Formteil (1) mittels eines spindelartigen Schraubentriebes (5) verstellbar gehalten ist, wobei der Schraubentrieb (5) mit Sperrmitteln (10) des Formteiles (1) korrespondiert, die ein selbständiges Lösen des Schraubentriebes (5) ausschließen.
